# EUROPEAN PATENT SPECIFICATION

(11) **EP 2 522 973 B1**
(45) Date of publication and mention of the grant of the patent: **29.06.2016**
(21) Application number: 11165439.8
(22) Date of filing: 10.05.2011
(51) Int. Cl.: G01L 19/00, G01L 19/06

(54) **Explosion Proof Adapter for Uncertified Components**
Explosionsgeschützter Adapter für nicht bescheinigte Komponenten
Adaptateur résistant aux explosions pour composants non certifiés

(43) Date of publication of application: 14.11.2012
(73) Proprietor: Schleifring und Apparatebau GmbH, 82256 Fürstenfeldbruck (DE)
(72) Inventor: Dettenhamer, Johann, 82296, Schöngeising (DE); Krischak, Martin, 80992, München (DE)
(74) Representative: Lohr, Georg

(56) References cited:
- WO-A1-2011/147829
- CN-U- 202 229 875
- DE-U1- 29 619 628
- JP-A- 2007 155 639
- KR-A- 20130 138 943
- US-A- 5 521 697
- US-A1- 2006 225 499
- US-A1- 2007 151 347
- US-A1- 2012 234 097

## Description

### Field of the invention

The invention relates to explosion proof cases and vessels.

### Description of the related art

Explosion protection is regulated in Europe by the ATEX standard consisting of two EU directives, describing what equipment and work environment is allowed in an environment with an explosive atmosphere. In general, an explosion hazard exists, whenever inflammatory media, such as gases and vapors are present in sufficiently high concentrations and may mix with air or pure oxygen. Such hazardous areas typically are found in and around chemical plants, mining and oil drilling areas or also close to grain silos.

The explosion protection measures are subdivided as follows:
- Primary explosion protection measures, which prevent or limit a hazardous explosive atmosphere.
- Secondary explosion protection measures, that prevent ignition of an explosive atmosphere. This means to avoid effective ignition sources.
- Tertiary explosion protection measures, which limit the effects of an explosion to an acceptable level by structural measures.

Such tertiary explosion protection measures comprise equipment which is robust and can stand an explosion from within, without transmitting the flame to the outside. Such equipment has the ex-code "d" referring to "flameproof enclosure", also meaning a flame proof enclosure. A requirement is that any holes and slits in the enclosure wall are designed to prevent a possible gas explosion inside the enclosure from being transmitted to an explosive gas cloud outside. This is done by flame proof gaps. Such flame proof gaps are disclosed in the US patent 4,619,147.

Furthermore such a flame proof enclosure must be designed to withstand any possible explosion in its interior. As a consequence such an enclosure is a solid and heavy container which is locked by large screws. Parts inside such enclosures are accessible only through maintenance covers, which are time consuming to open and often require heavy tools like cranes.

Document DE 296 19 628 U1 discloses a flow sensor for monitoring explosive media. It does not disclose a flameproof enclosure.

Document US 2007/0151347 A1 discloses a pressure sensor with an integrated EEPROM for storing sensor-specific data. This also does not disclose any flameproof components.

Document JP 2007 155639 A discloses an explosion-proof-type gas sensor device which is mounted inside a container.

Document US 5,521,697 A discloses a protective cover for a fiber-optic scanner head of the type for monitoring the presence of flames in a boiler furnace. Document US 2006/225499 A1 discloses a tank seal for guided wave radar level measurement.

### Summary of the invention

The problem to be solved by the invention is to mount parts like desiccators and sensors in flame proof enclosures in such a way that they can be easily accessed and exchanged without opening the maintenance covers. Another problem to be solved is to design a flame proof enclosure, in which specific parts can be accessed and exchanged without opening the maintenance covers.

Solutions of the problem are described in the independent claims. The dependent claims relate to further improvements of the invention.

According to the invention an adapter is provided for holding and encapsulating parts like desiccators and sensors into a flame proof enclosure. The adapter has as at least one inner space for holding such a part. The adapter furthermore has an internal tubular member 13 extending into a bore 37 of the flame proof enclosure. The sidewalls of the internal tubular member 13 form a flame proof gap together with the sidewalls of the bore 37 of the flame proof enclosure. This means that both sidewalls have a specified length and maximum gap distance in between according to the ATEX standard. Further the adapter has an external tubular member 12 extending into an outward direction of the flame proof enclosure and being closed by a locking screw 33. The thread of the locking screw forms a flame proof gap together with a corresponding inner thread 14 in the external tubular member. Preferably the adapter has a flange for fastening the adapter to the flame proof enclosure. The benefit of the invention is that the adapter itself is a flame proof device which may be certified according to ATEX or other standards. Furthermore it is flame proof attached to the flame proof enclosure. This adapter may hold any part like a desiccator or a sensor, which must not necessarily be according to ATEX or other standards, as the adapter meets more requirements and safely encloses the part. The adapter even may be empty. By this way it is possible to provide means for safely upgrading flame proof enclosures with smaller parts like the desiccators or sensors. Such parts may simply be exchanged during maintenance, for example for replacement of a used up desiccator. Here only locking screw 33 must be removed to gain access to the part. This is a very simple step which involves no risks and does not require any specific and specifically heavy tools. It is no more necessary to open the flame proof enclosure itself which usually requires a lot of time and heavy tools like cranes. Furthermore the risk of damaging any flame proof gap, which usually has very close mechanical tolerances, during disassembly and reassembly of heavy parts can be eliminated. Damage of such a flame proof gap would result in loss of the ATEX certification and therefore may require shutting down the facility.

According to another embodiment of the invention the inner tubular member 13 of the adapter may comprise an outer thread, fitting into an inner thread of the bore 37 of the flame proof enclosure. In this embodiment the flange can be omitted as the adapter is fastened to explosion proof enclosure by the thread.

In a further embodiment of the invention the external tubular member 12 may have an outer thread which may be covered by a threaded cap.

Furthermore the adapter may have an internal inner thread for fastening any part like a desiccator or a sensor.

In another embodiment the locking screw 33 may be a cable fitting. By this a cable may be connected to a sensor within the adapter.

A further aspect of the invention is a flame proof enclosure having at least one adapter as described above. Such an enclosure may be used for enclosing a slipring or a plurality of sliprings. To prevent corrosion of the slipring and any other mechanical or electronic parts contained within the flame proof enclosure preferably at least one desiccator is provided. It may be held and encapsulated by an adapter as described above.

### Description of Drawings

In the following the invention will be described by way of example, without limitation of the general inventive concept, on examples of embodiment with reference to the drawings.
- Figure 1: shows an adapter according to the invention.
- Figure 2: shows a front view of the adapter.
- Figure 3: shows a side view of the adapter.
- Figure 4: shows a cross-section of the adapter.
- Figure 5: shows the flame proof gaps of the adapter.
- Figure 6: shows the adapter mounted into a flame proof enclosure.

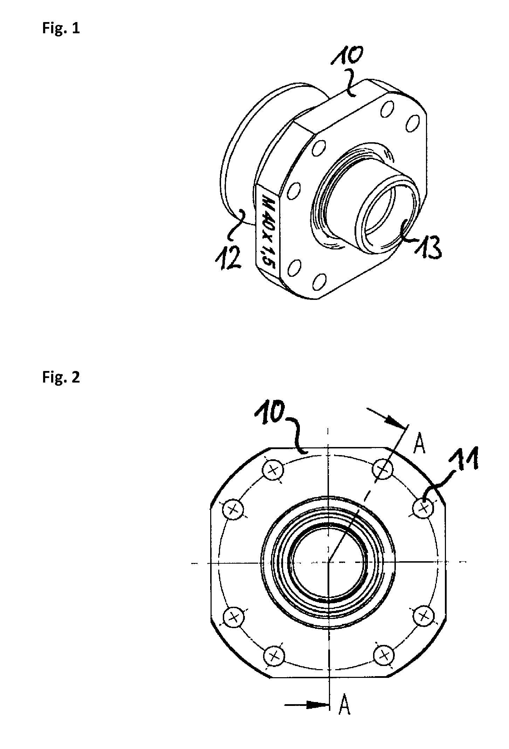

In figure 1 a preferred embodiment according to the invention is shown. The adapter has a flange 10 with an internal tubular member 13 and one side and an external tubular member 12 at the other side. In this example the flange is marked "M 40 x 1,5" designating the inner thread of the external tubular member 12.

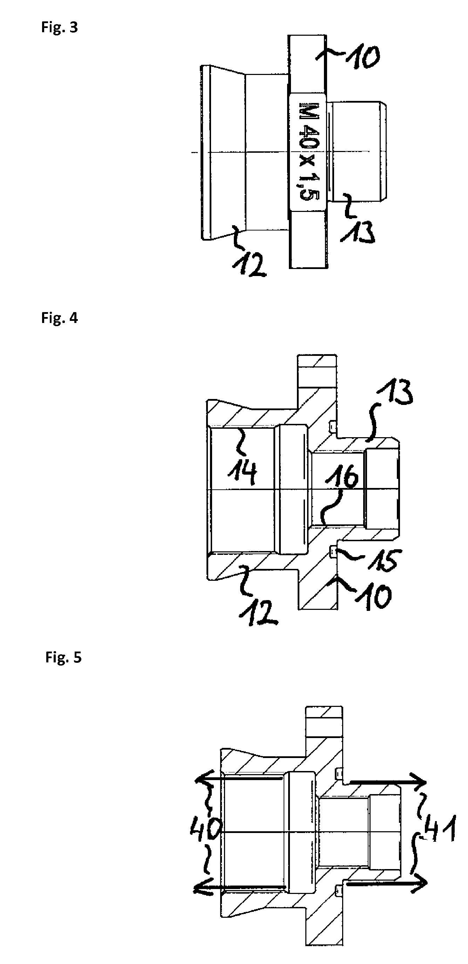

In figure 2 a front view of the adapter from the side of internal tubular member 13 is shown. The flange is fixed to a flame proof enclosure by means of screws through the holes 11. The arrows A-A mark the cut for the sectional view of figure 4.

In figure 3 a side view of the adapter is shown. Here the flange 10, internal tubular member 13 and external tubular member 12 can be seen.

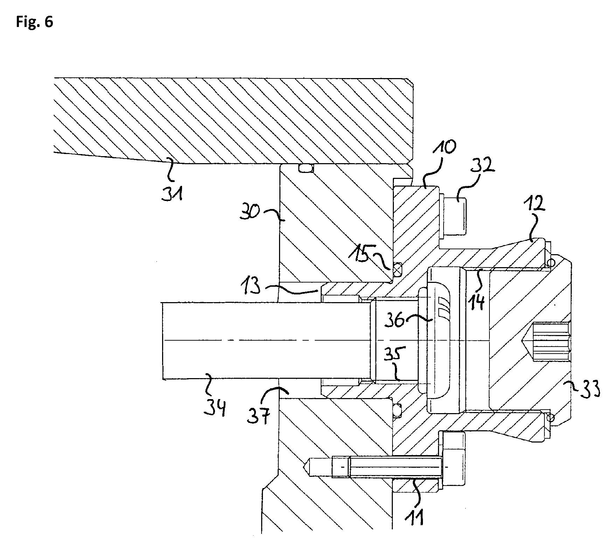

Figure 4 shows a cross-section of the adapter cut through the line marked A -A in figure 2. The external tubular member 12 has an external inner thread 14 for holding the locking screw 33 as shown in figure 6. Furthermore an internal inner thread 16 may be provided to hold the at least one part within the adapter. Furthermore a groove 15 may be provided for inserting a seal like an O-ring.

In figure 5 the flame proof gaps (ignition gaps) of the adapter are shown. There is an internal flame proof gap 41 between the side wall is of internal tubular member 13 and the sidewalls of the bore 37 of the flame proof enclosure. Furthermore there is an external flame proof gap 40 between the threat of locking screw 33 and the corresponding external inner thread 14.

Figure 6 shows the adapter mounted into a flame proof enclosure. The flame proof enclosure comprises of a vessel side wall 30, which may be a cylindrical wall and a vessel cover 31. This is comparatively heavy and secured by large screws (not shown) and therefore requires a lot of time and heavy tools for removal. The adapter contains a desiccator 34 which is held by means of its desiccator thread 35 in the internal inner thread 16 of the adapter. The desiccator has a cap 36 which may also include an indicator to show whether the desiccator is used up. The desiccator 34 extends through bore 37 into the flame proof enclosure. The flame proof enclosure is sealed by the adapter having an internal flame proof gap between sidewalls of internal tubular member 13 and sidewalls of bore 37 and an external flame proof gap between external inner thread 14 and locking screw 33. Flange 10 of the adapter is fixed to the flame proof enclosure by screws 33 through holes 11.

### List of reference numerals

- 10: flange
- 11: hole
- 12: external tubular member
- 13: internal tubular member
- 14: external inner thread
- 15: groove
- 16: internal inner thread
- 30: vessel side wall
- 31: vessel cover
- 32: screw
- 33: locking screw
- 34: desiccator
- 35: desiccator thread
- 36: desiccator cap
- 37: bore
- 40: internal flame proof gap
- 41: external flame proof gap

## Claims

1. Adapter for holding and encapsulating at least one part like a desiccator or a sensor in a flame proof enclosure, comprising
- at least one inner space for holding the part,
- a flange for fastening the adapter to the flame proof enclosure **characterized in, that** it has
- an internal tubular members (13) extending into a bore 37 of the flame proof enclosure, the internal tubular member (13) having sidewalls forming a flame proof gap together with the sidewalls of the bore (37) of the flame proof enclosure,
- an external tubular member (12) extending into an outward direction of the flame proof enclosure and being closed by a locking screw (33) the thread of the locking screw forming a flame proof gap together with a corresponding inner thread (14) in the external tubular member.

2. Adapter according to claim 1,
**characterized in, that**
the locking screw (33) is a cable fitting.

3. Flame proof enclosure having at least one adapter for holding and encapsulating at least one part like a desiccator or a sensor, the adapter comprising
- at least one inner space for holding the part,
- a flange for fastening the adapter to the flame proof enclosure **characterized in, that**
- an internal tubular member (13) extending into a bore (37) of the flame proof enclosure, the internal tubular member (13) having sidewalls forming a flame proof gap together with the sidewalls of the bore of the flame proof enclosure,
- an external tubular member (12) extending into an outward direction of the flame proof enclosure and being closed by a locking screw (33) the thread of the locking screw forming a flame proof gap together with a corresponding inner thread 14 in the external tubular member.

## Patentansprüche

1. Adapter zum Halten und Einkapseln zumindest eines Teils, wie eines Trockners oder eines Sensors, in eine druckfeste Kapselung, umfassend:
- zumindest einen Innenraum zum Aufnehmen des Teils;
- einen Flansch zum Befestigen des Adapters an der druckfesten Kapselung, **dadurch gekennzeichnet, dass** er Folgendes aufweist:
- ein inneres rohrförmiges Element (13), das sich in ein Loch (37) der druckfesten Kapselung erstreckt, wobei das innere rohrförmige Element (13) Seitenwände umfasst, die zusammen mit den Seitenwänden des Loches (37) der druckfesten Kapselung einen druckfesten Spalt bilden,
- ein äußeres rohrförmiges Element (12), das sich in Richtung nach außen von der druckfesten Kapselung erstreckt und durch eine Verriegelungsschraube (33) verschlossen ist,
das Gewinde der Verriegelungsschraube zusammen mit einem entsprechenden Innengewinde (14) einen druckfesten Spalt in dem äußeren rohrförmigen Element bildet.

2. Adapter nach Anspruch 1,
**dadurch gekennzeichnet, dass**
die Verriegelungsschraube (33) eine Kabelverschraubung ist.

3. Druckfeste Kapselung mit zumindest einem Adapter zum Aufnehmen und Einkapseln zumindest eines Teils, wie eines Trockners oder eines Sensors, wobei der Adapter umfasst:
- zumindest einen Innenraum zum Aufnehmen des Teils;
- einen Flansch zum Befestigen des Adapters in der druckfesten Kapselung **dadurch gekennzeichnet, dass**
- ein inneres rohrförmiges Element (13) sich in ein Loch (37) der druckfesten Kapselung erstreckt, wobei das innere rohrförmige Element (13) Seitenwände umfasst, die zusammen mit den Seitenwänden des Loches der druckfesten Kapselung einen druckfesten Spalt bilden,
- ein äußeres rohrförmiges Element (12), das sich in Richtung nach außen von der druckfesten Kapselung erstreckt und durch eine Verriegelungsschraube (33) verschlossen ist,
das Gewinde der Verriegelungsschraube zusammen mit einem entsprechenden Innengewinde (14) einen druckfesten Spalt in dem äußeren rohrförmigen Element bildet.

## Revendications

1. Un adaptateur pour soutenir et encapsuler au moins une partie comme un dessicateur ou capteur dans un boîtier à l'épreuve des flammes, comprenant
- au moins un espace intérieur pour soutenir la partie,
- une bride pour fixer l'adaptateur au boîtier à l'épreuve des flammes **caractérisé en ce qu'**il a
- un dispositif tubulaire interne (13)
s'étendant dans un alésage (37) du boîtier à l'épreuve des flammes, le dispositif tubulaire interne (13) ayant
des parois latérales formant un espace à l'épreuve des flammes avec les parois latérales de l'alésage (37) du boîtier à l'épreuve des flammes,
- un dispositif tubulaire externe (12)
s'étendant dans une direction extérieure
du boîtier à l'épreuve des flammes et étant fermé par une vis de verrouillage (33) le filetage de la vis de verrouillage formant un espace à l'épreuve des flammes avec un filet intérieur correspondant (14) dans le dispositif tubulaire externe.

2. Un adaptateur selon la revendication 1,
**caractérisé en ce que**
la vis de verrouillage (33) est un presse-étoupe.

3. Un boîtier à l'épreuve des flammes ayant au moins un adaptateur pour soutenir et encapsuler au moins une partie comme un dessicateur ou un capteur, l'adaptateur comprenant
- au moins un espace interne pour soutenir la partie,
- une bride pour fixer l'adaptateur au boîtier à l'épreuve des flammes **caractérisée en ce que**
- un dispositif tubulaire interne (13) s'étendant dans un alésage (37) du boîtier à l'épreuve des flammes, le dispositif tubulaire interne (13) ayant des parois latérales formant un espace à l'épreuve des flammes avec les parois latérales de l'alésage du boîtier à l'épreuve des flammes,
- un dispositif tubulaire externe (12) s'étendant dans un sens extérieur du boîtier à l'épreuve des flammes et étant fermé par une vis de verrouillage (33)
le filetage de la vis de verrouillage formant un espace à l'épreuve des flammes avec un filet interne correspondant (14) dans le dispositif tubulaire externe.
